# EUROPEAN PATENT SPECIFICATION

(11) **EP 3 183 390 B1**
(45) Date of publication and mention of the grant of the patent: **22.04.2020**
(21) Application number: 15713217.6
(22) Date of filing: 12.03.2015
(51) Int. Cl.: E01C 5/00, E01C 9/08

(54) **SUPPORT UNIT FOR FORMING A TEMPORARY ROADWAY**
STÜTZEINHEIT ZUR HERSTELLUNG EINER VORÜBERGEHENDEN FAHRBAHN
UNITÉ SUPPORT POUR LA FORMATION D'UNE CHAUSSÉE TEMPORAIRE

(30) Priority: 21.08.2014 GB 201414866
(43) Date of publication of application: 28.06.2017
(60) Divisional application: 20160207.5
(73) Proprietor: Linebacker UK Limited, Stansted, Essex CM24 8GF (GB)
(72) Inventor: ELSE, Robert Arthur, Castle Donington Derbyshire DE74 2PP (GB); SHUERT, Lyle, Birmingham, Michigan 48009 (US)
(74) Representative: Abraham, Richard
(86) International application number: PCT/GB2015/050727
(87) International publication number: WO 2016/027054

(56) References cited:
- EP-A2- 2 733 261
- BE-A- 525 721
- JP-A- 2001 090 005

## Description

This invention concerns a support component, and particularly a support component connectable to similar components to form a temporary roadway, and also a roadway made up of such components.

Temporary roadways are required in a number of situations. For instance these may be required in a construction project, and particularly when installing a large product such as a wind turbine or the like, which following construction will not require heavy duty road access thereto. A temporary roadway can therefore prevent the requirement of constructing a conventional permanent roadway or other access.

A number of temporary roadways have already been proposed. Metal systems have been used, but these often require the installation of security, or require securing to avoid potential theft of the metal roadway for scrap value. Arrangements using plastics materials have been proposed, but these are often proved extremely heavy and/or liable to water ingress meaning that once wet the products can be very heavy.

EP 2733261 discloses a support component as defined in the precharacterising portion of claim 1.

In accordance with a first aspect of the present invention, there is provided a support component as defined in appendant independent claim 1 to which reference should now be made.

The recesses provided in the underside surface of the support component provide good grip on underlying ground, but their tapering profile has been found to provide sinkage to a certain degree only in the ground, and thereafter further material cannot enter the recesses thereby retaining the support units in a required position at a required height relative to the surrounding ground.

The recesses may extend over at least 30%, preferably more than 40%, 50% or 60%, of the surface area of the underside of the support component.

The recesses may be provided in a uniform pattern.

The first angle may be between 5° and 20°, may be between 5° and 15°, may be between 8° and 12° and may be substantially 10°. The second angle may be between 30 and 60°, may be between 35 and 50°, may be between 40 and 50°, may be between 43 and 47°, and may be substantially 44.35°.

The recesses may extend for between 60 and 95%, may be between 70 and 90%, 80 and 90%, 85 and 90% and may be substantially 88.2%, of the depth of the tile.

The tile may be between 50 and 150 mm thick, may be between 50 and 100 mm thick, may be between 70 and 80 mm thick, and may be substantially 75 mm thick.

The second portion may be axially offset relative to the first portion by substantially 45°.

Formations may be provided on the upper surface of the support component to enhance grip.

The plurality of connection arrangements may be arranged to be selectively movable between locked and unlocked conditions, and may be arranged to urge adjacent support components together when moving to the locked condition.

The connection arrangements may include one or more male units with a rotatable member on a support component, rotatingly engageable with female units on adjacent support components. The female units may comprise cam surfaces such that as a rotatable member on a male unit engages therewith and is rotated, this urges together the respective support components.

The rotatable member may comprise a head with a stem extending therefrom, and a crossbar extending from the end of the stem spaced from the head. A formation may be provided on the head which can be engaged by a tool to permit rotation of the rotatable member relative to a respective support component.

The female units may include an elongate opening through which the rotatable member crossbar can pass when in a parallel alignment, with the crossbar engaging against the female unit cam surfaces when rotated from a parallel alignment after passing through the elongate opening.

The male units may be made of a plastics material such as for example nylon, and may include an inner metal reinforcement. The female units may be made of a plastics material such as for example nylon.

The support component may be at least generally rectangular in plan view and may have one longer pair of sides and one pair of shorter sides. The longer sides may be between 30 and 70% longer than the shorter sides, and may be substantially 50% longer.

A main flange may be provided extending along a one of the sides of the support component, and a corresponding main recess may be provided by extending along the opposite side of the support component. The recess may be dimensioned so as to receive a main flange on an adjacent support component, such that the adjacent components extend at least generally coplanar to each other.

The main flanges and recesses may be provided on the longer pair of sides of the support component.

The male units may be provided on the main flanges, with the female units provided on the main recesses.

Minor flanges and respective recesses may be provided on the other sides of the support component.

Formations may be provided on or adjacent to the minor flanges and minor recesses to permit adjacent support components to be mounted together. The formations may comprise recesses, and one or more openings may be provided through the recesses.

Lifting attachments may be provided on the support component. The lifting attachments may comprise formations mountable in openings in the support component. The lifting attachments may be provided adjacent corners of the support component. The lifting formations may be made of metal.

In accordance with a second aspect of the invention there is provided a temporary roadway, the temporary roadway comprising a plurality of support components in accordance with any embodiment of the first aspect of the present invention, connected together.

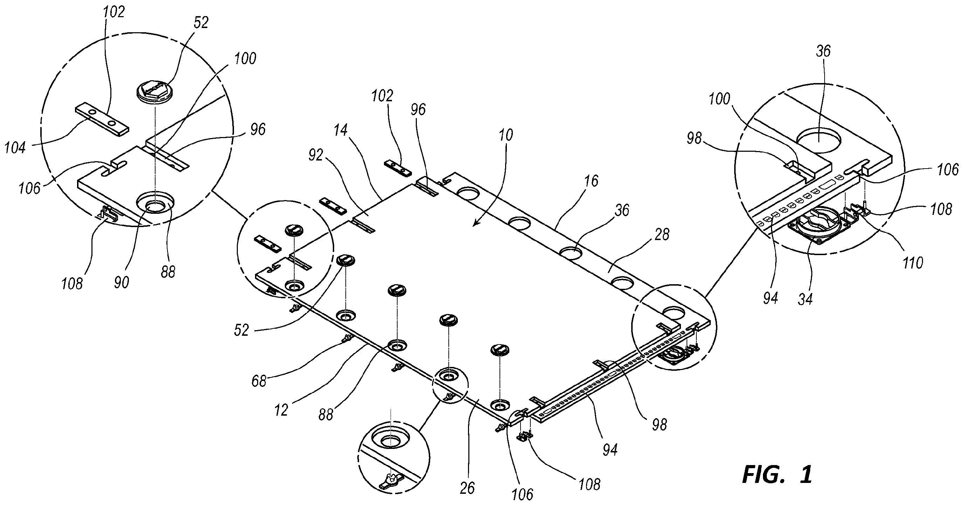

An embodiment of the present invention will now be described by way of example and with reference to the accompanying drawings, in which: -
Fig. 1 is a diagrammatic perspective view from above of a support component according to the invention, with areas of increased detail;

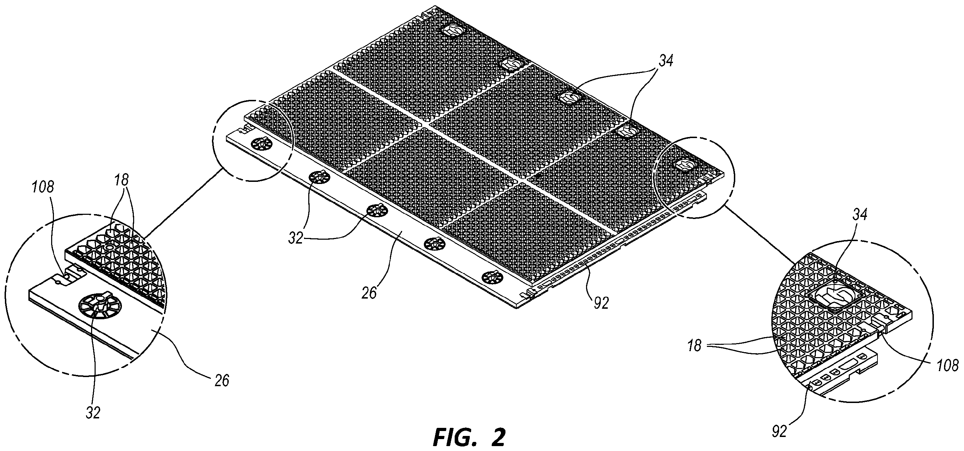

Fig. 2 is a diagrammatic perspective view from below of the component of Fig. 1, with areas of increased detail;

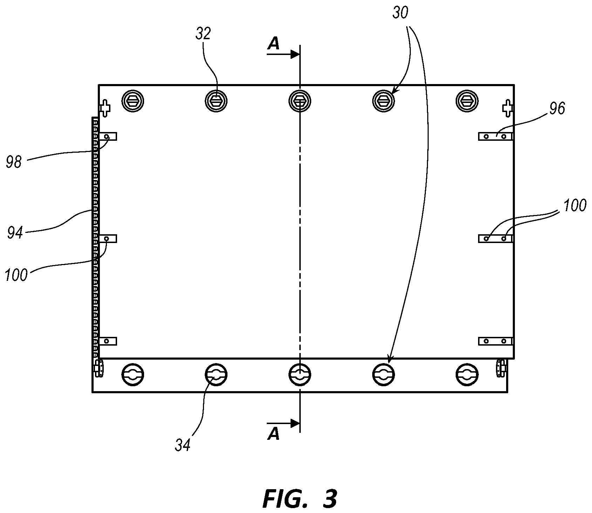

Fig. 3 is a diagrammatic plan view from above of the component of Fig. 1;

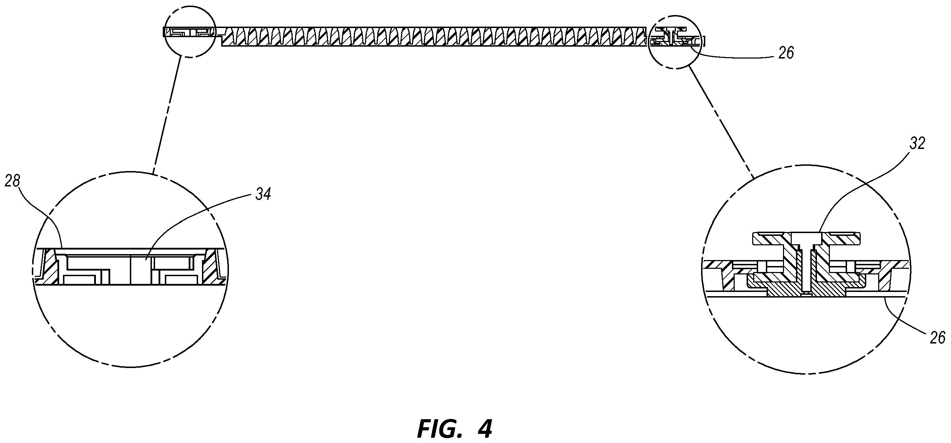

Fig. 4 is a diagrammatic cross sectional side view along the line A to A of Fig. 3, with areas of increased detail;

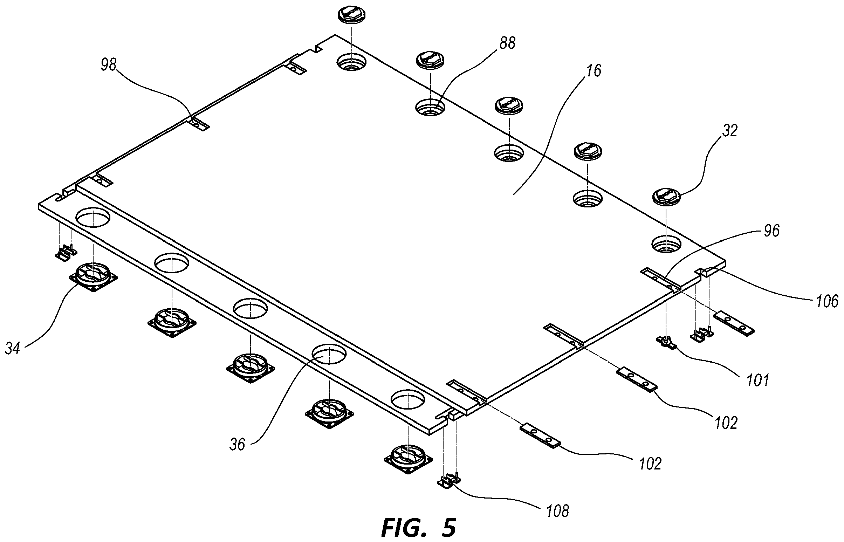

Fig. 5 is a diagrammatic exploded perspective view from above of the component of Fig. 1;

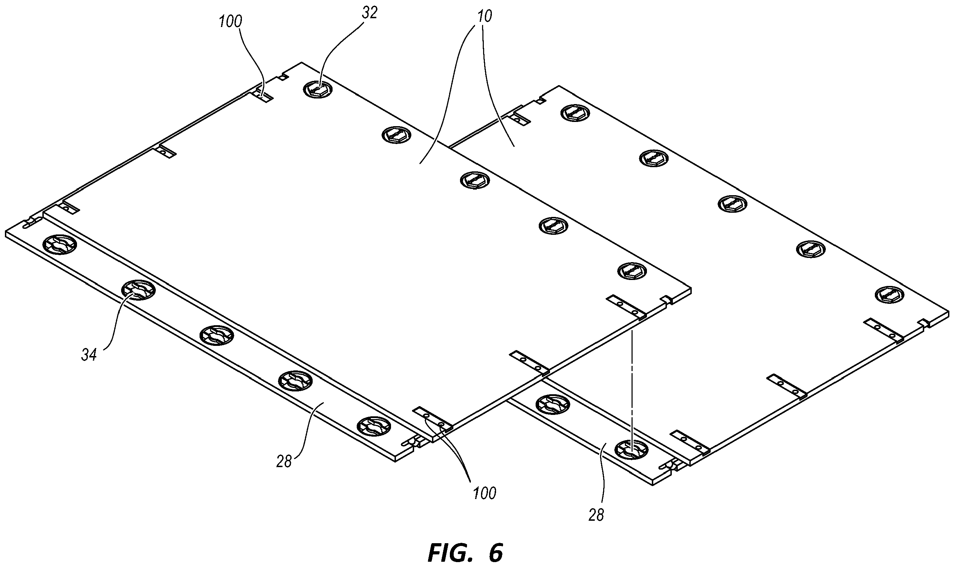

Fig. 6 is a diagrammatic perspective view from above showing two components as shown in Fig. 1 being mounted together;

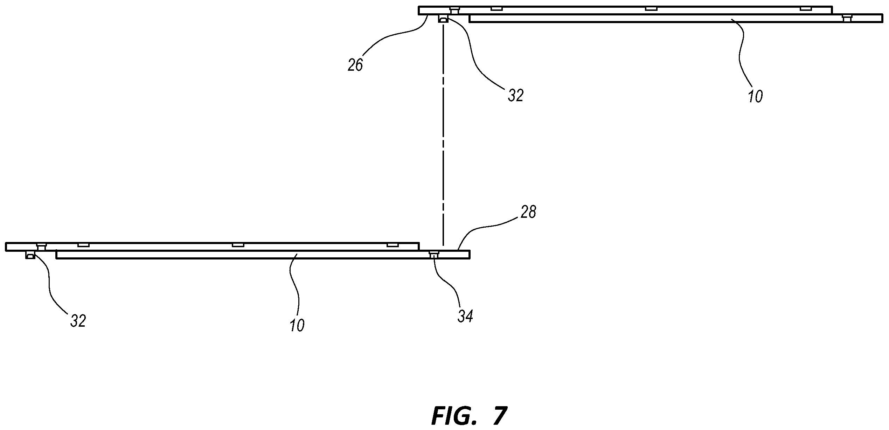

Fig. 7 is a diagrammatic side view showing two components as shown in Fig. 1 being connected together;

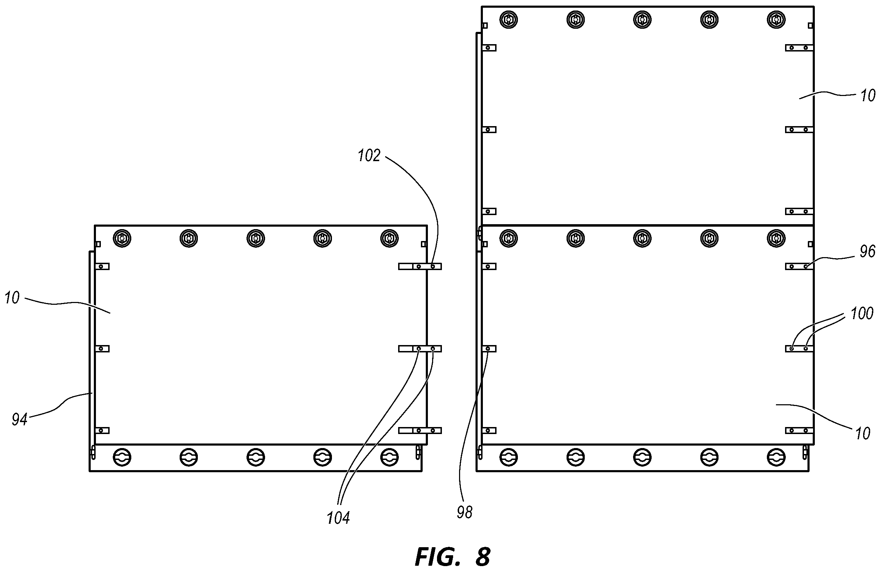

Fig. 8 is a diagrammatic plan view of two components as shown in Fig. 1 connected together with a third component being connected thereto;

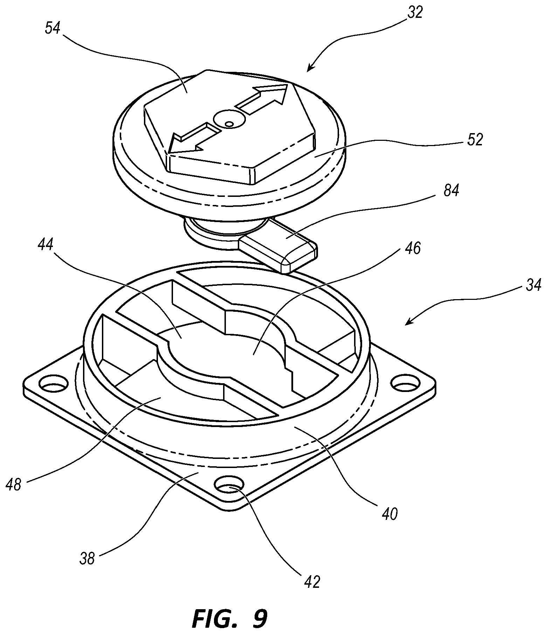

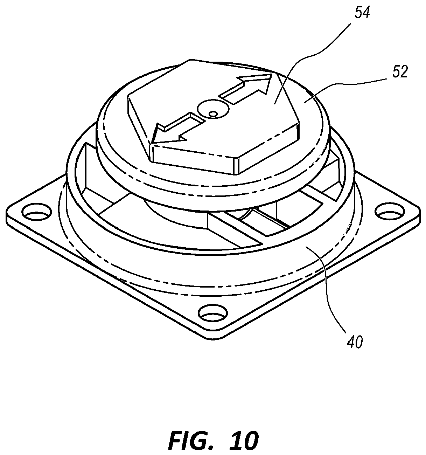

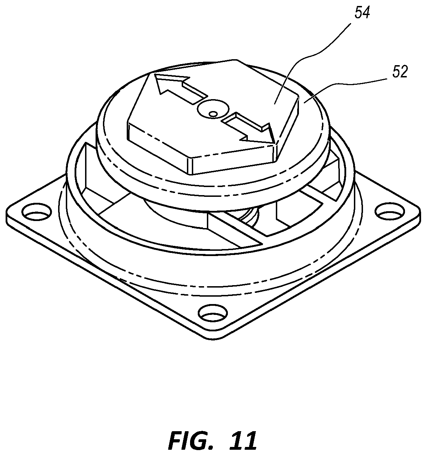

Figs 9 to 11 are sequential perspective views from above of parts of two components as shown in Fig. 1 being connected together;

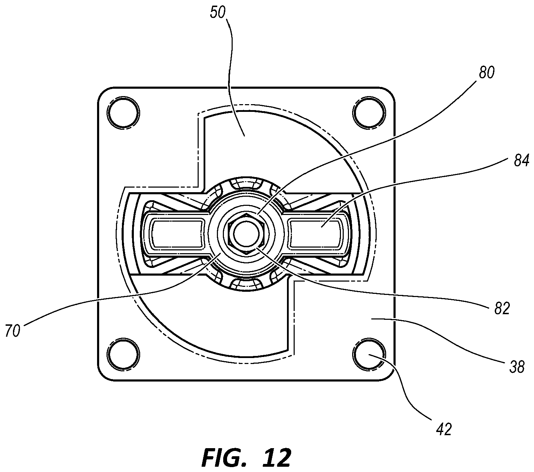

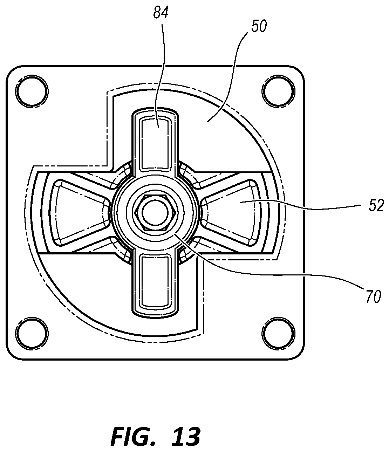

Figs 12 and 13 are diagrammatic views from beneath of the parts shown in Figs. 10 and 11 being connected together, and correspond respectively to the positions shown in Figs. 10 and 11;
Fig. 14 is a diagrammatic exploded view of one of the parts shown in Fig. 9;

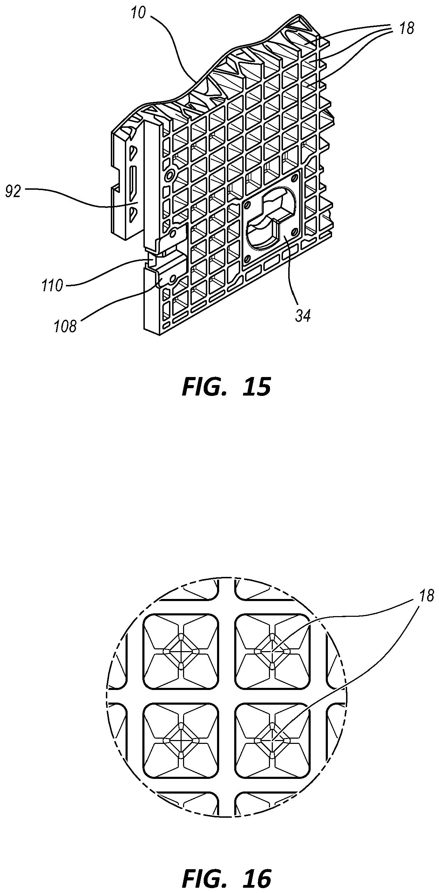

Fig. 15 is a diagrammatic perspective view from beneath of a section of the component of Fig. 1;
Fig. 16 is a diagrammatic view from beneath of a smaller part of the component of Fig. 1;

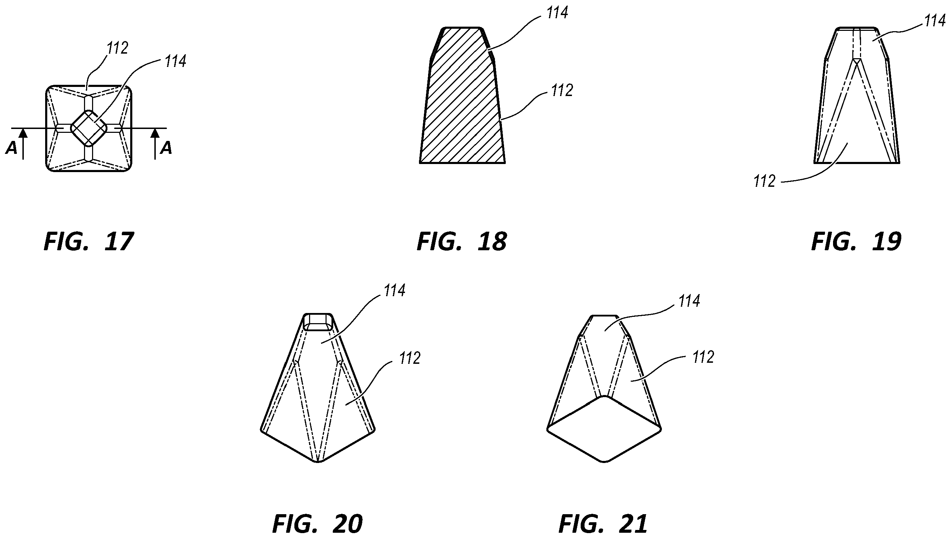

Fig. 17 is a diagrammatic view from beneath of a feature of the component of Fig. 1;
Fig. 18 is a diagrammatic cross sectional side view of the feature of Fig. 17;
Fig. 19 is a diagrammatic side view of the feature of Fig. 17;
Fig. 20 is a diagrammatic perspective view from above of the feature of Fig. 17; and
Fig. 21 is a diagrammatic perspective view from below of the feature of Fig. 17.

The drawings show a support unit 10 connectable together with similar such units to form a temporary roadway. The units 10 may be made from any suitable materials such as a plastics material which could be high density polyethylene.

The support units has a generally rectangular configuration, and in this example have a pair of longer sides 12 which are 3m long, and a pair of shorter sides 14 which are 2m long. The support member 10 provides an upper support surface 16 which may be provided with a plurality of projections or other formations or finishes to enhance grip. A plurality of upwardly extending and tapering recesses 18 are provided on a lower surface 20 of the support unit 10 as will be hereinafter described.

A one of the longer sides 12 has a flange 26 extending along the length thereof whilst the other of the longer sides 12 provides a recess 28. The recess 28 is of a size to receive the flange 26 on an adjacent such unit 10 such that adjacent support units 10 will be substantially coplanar.

Five locking arrangements 30 are provided along the longer sides 12 with five male units 32 provided on the flange 26 and five corresponding female units 34 on the recess 28. Five spaced openings 36 are provided in the recess 28 to each receive a female unit 34. The female units 34 have a square base 38 with an upstanding circular portion 30 which is a sliding fit in the openings 36. Openings 42 are provided near each corner of the base 38 to permit mounting by screws or otherwise to the underside of the recess 28. The circular portion 42 has a diametrically extending opening 44 which has a wider central portion 46. Sloped faces 48 provide arcuate downwardly facing cam surfaces 50.

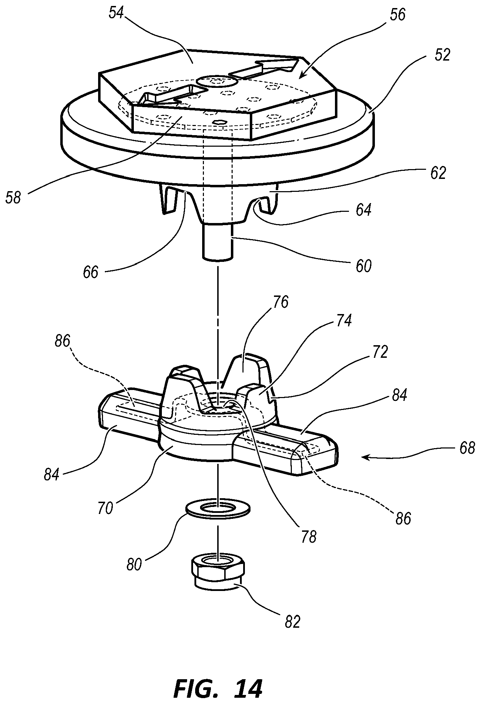

The male units 32, as best illustrated in Fig. 14, comprise a head part 52 with an upstanding hexagonal shaped projection 54 which can be engaged by an appropriate tool. A metal reinforcement 56 is embedded in the head part 52, and the reinforcement 56 comprises a planar head 58 wholly located in the head part 52 with a shaft 60 extending therefrom and downwardly from the head part 52 as shown in Fig. 14.

On the underside of the head part 52 as shown in Fig. 14, an upstanding circular castellated formation 62 is provided with smaller and larger recesses 64, 66. The male units 32 also includes a second part 68 with a central circular section 70 which has a castellated circular formation 72 which faces towards the castellated formation 62 and is engageable therewith with smaller and larger projections 74, 76 engageable respectively in the recesses 66, 68.

A central opening 78 is provided through the formation 72 through which the shaft 60 is extendible. At least the distal end of the shaft 60 is threaded and a washer 80 can fit thereover engageable against the underside of the section 70, with the male unit being held together by a nut 82 engaging on the threaded shaft 60.

The second part 68 also comprises a cross piece 84 extending radially on opposite sides of the central circular section 70. A profiled metal reinforcement 86 is provided within the second part 68 extending across the cross piece 84 with a through hole to receive the shaft 60.

Five circular recesses 88 are provided in the flange 26 in positions corresponding to the openings 36. A smaller central hole 90 is provided through each of the recesses 88. The male units 32 can be fitted together with the head part 52 located in the respected recess 88, with the formations 62, 72 and shaft 60 extending through the hole 90.

A smaller flange 92 and corresponding recess 94 are provided respectively along the shorter sides 14. Three elongate recesses 96 are provided in the upper support surface 16 adjacent the smaller flange 92 and three corresponding elongate recesses 98 are provided in the upper support surface 16 adjacent each of the smaller recesses 94. The recesses 96, 98 extend parallel to the longer sides 12. The recesses 96 which extend over the top of the flange 92 are longer than the recesses 98 which extend adjacent to the recess 94.

Two mounting holes 100 are provided in the recesses 96 extending over the flanges 92, whilst one mounting hole 1 00 is provided in the recesses 98. A trapped nut 101 may be provided immediately below the holes 100. A plurality of straps 102 are provided which are sliding fits in the recesses 96, 98, and can wholly locate in the recesses 96 when not required. A pair of holes 104 are provided in the straps 102, with spacing corresponding in position to the holes 100 in the recesses 96 when not in use. To connect adjacent units 10, the holes 104 can be located over the outer mounting holes 100 in the recess 96, and the mounting holes 100 in the recess 98. Bolts (not shown) are provided for retaining the straps 102 in position.

Profiled openings 106 are provided adjacent each corner of the support unit. Each opening 106 comprises a relatively narrow entry leading to a wider part, and to a further distal narrower part. The profiled openings 106 can receive metal lifting members 108 which are profiled to locate in the openings 106 and with a cross member 110 extending across the wider part of the openings 106 to which a line means can be connected.

As indicated a plurality of recesses 18 are provided in the underside of the support unit 10. The recesses 18 have a generally square profile and have a first portion 112 which tapers inwardly upwards at an angle of 10° and extends for 47.63 mm. A second tapering portion 114 extends from the first portion 112. The second portion 114 is again of a square cross section but is rotated through 45° relative to the first portion. The second portion 114 tapers at 44.35° for a further 18.52 mm. These dimensions are for a unit 10 which is 75mm thick.

In use, adjacent support units 10 can be mounted together by the respective male units 32 engaging with the female units 34. When initially engaged this provides a loose fit between adjacent units 10 which can be important, and can be particularly so on uneven ground where it is not possible to accurately align adjacent units 10.

The locking arrangements 30 can then be moved to a closed position by rotating the male units 32 such that the cross piece 84 engages against the cam surfaces 50 progressively urging the two support units 10 closer together. A lip may be provided towards the end of the cam surfaces 50 such that when the cross piece 84 moves therepast this retains the locking arrangements 30 in a locked condition.

With the support units 10 mounted together along their longer sides 12 this may provide a temporary roadway of required width. It may though be required to mount further support units 10 to the side to provide an increased width roadway or a particular location. In this instance with the respective smaller flanges 92 engaging in the respective smaller recesses 94, the support units 10 can be held together by the straps 102 being mounted extending across adjacent support units 10, and engaging in the respective recesses 96, 98.

There are thus described support units for forming a temporary roadway, and a temporary roadway formed from such support units. The recesses 18 provide good grip on underlying ground, but their tapering profile has been found to provide sinkage to a certain degree only in the ground, and thereafter further material cannot enter the recesses 18 thereby retaining the support units 10 in a required position at a required height relative to the surrounding ground.

As noted the fact that the locking arrangements can be interconnected in a relatively loose condition and then fully tightened, means that adjacent support units 10 can readily be interconnected even on uneven ground. The lifting members 108 permit the units 10 to be mechanically moved, or handled using appropriate tools engaging with the lifting members.

It is to be realised that various modifications may be made without departing from the scope of the invention. For instance different locking arrangements could be provided, and arrangements other than straps described above could be used. The recesses in the underside of the support units could take a different form. The support units may be a different size.

Whilst endeavouring in the foregoing specification to draw attention to those features of the invention believed to be of particular importance it should be understood that the scope of protection is as defined in the appendant claims.

## Claims

1. A support component (10) connectable to similar components to form a temporary roadway, the support component (10) comprising:
an underside surface (20);
an upper support surface (16);
a plurality of recesses (18) provided in the underside surface (20) to provide engagement with the ground; and
a plurality of connection arrangements (30) being provided for selectively connecting the support component (10) to adjacent support components;
wherein the plurality of recesses (18) each taper inwardly into the support component (10) in a direction towards the upper support surface (16) and comprise a first portion (112) extending from the underside surface and a second portion (114) extending from the first portion (112);
**characterised in that** the first portion (112) has a substantially square cross-section in plan view and the second portion (114) has a substantially square cross-section in plan view, the substantially square cross-section of the second portion (114) being axially rotationally offset relative to the substantially square cross-section of the first portion (112);
wherein the first portion (112) tapers at a first angle and the second portion (114) tapers at a second angle, the second angle being greater than the first angle.

2. The support component (10) of claim 1, wherein the second portion (114) is axially rotationally offset relative to the first portion (112) by substantially 45°.

3. The support component (10) of claim 1, wherein the plurality of connection arrangements (30) comprise a plurality of locking arrangements for retaining connected adjacent support components together, the plurality of locking arrangements being arranged to be selectively movable between locked and unlocked conditions, with the locking arrangements being arranged to urge adjacent support components together when moving to the locked condition, wherein the locking arrangements include one or more male units (32) with a rotatable member (84) on a support component (52), rotatingly engageable with female units (34) on adjacent support components, wherein the female units (34) comprise cam surfaces (50) such that as the rotatable member (84) on the male unit (32) engages therewith and is rotated, this urges together the respective support components.

4. The support component (10) of claim 1, wherein the plurality of recesses (18) each have a closed top surface.

5. The support component (10) of claim 1, wherein the plurality of recesses (18) limit sinkage of the support component into the ground surface when material from the ground surface enters the plurality of recesses (18).

6. A temporary roadway, the temporary roadway comprising a plurality of support components (10) as defined in any of claims 1-5, connected together.

## Patentansprüche

1. Stützkomponente (10), die mit ähnlichen Komponenten verbunden werden kann, um eine vorübergehende Fahrbahn zu bilden, wobei die Stützkomponente (10) umfasst:
eine Unterseitenoberfläche (20);
eine obere Stützoberfläche (16);
eine Vielzahl von Aussparungen (18), die in der Unterseitenoberfläche (20) bereitgestellt sind, um eine Eingriffnahme mit dem Boden bereitzustellen; und
eine Vielzahl von Verbindungsanordnungen (30), die zum selektiven Verbinden der Stützkomponente (10) mit benachbarten Stützkomponenten bereitgestellt sind;
wobei die Vielzahl von Aussparungen (18) sich jeweils nach innen in die Stützkomponente (10) in eine Richtung zur oberen Stützoberfläche (16) verjüngen und einen ersten Abschnitt (112), der sich von der Unterseitenoberfläche erstreckt, und einen zweiten Abschnitt (114), der sich vom ersten Abschnitt (112) erstreckt, umfassen;
**dadurch gekennzeichnet, dass** der erste Abschnitt (112) einen im Grundriss im Wesentlichen quadratischen Querschnitt aufweist und der zweite Abschnitt (114) einen im Grundriss im Wesentlichen quadratischen Querschnitt aufweist, wobei der im Wesentlichen quadratische Querschnitt des zweiten Abschnitts (114) relativ zum im Wesentlichen quadratischen Querschnitt des ersten Abschnitts (112) axialrotationsbezogen versetzt ist;
wobei der erste Abschnitt (112) sich in einem ersten Winkel verjüngt und der zweite Abschnitt (114) sich in einem zweiten Winkel verjüngt, wobei der zweite Winkel größer als der erste Winkel ist.

2. Stützkomponente (10) nach Anspruch 1, wobei der zweite Abschnitt (114) relativ zum ersten Abschnitt (112) um im Wesentlichen 45° axialrotationsbezogen versetzt ist.

3. Stützkomponente (10) nach Anspruch 1, wobei die Vielzahl von Verbindungsanordnungen (30) eine Vielzahl von Verriegelungsanordnungen zum Zusammenhalten verbundener benachbarter Stützkomponenten umfasst, wobei die Vielzahl von Verriegelungsanordnungen angeordnet sind, um zwischen verriegelten und nicht verriegelten Zuständen selektiv bewegt werden zu können, wobei die Verriegelungsanordnungen angeordnet sind, um benachbarte Stützkomponenten zusammenzudrängen, wenn sie sich in den verriegelten Zustand bewegen, wobei die Verriegelungsanordnungen eine oder mehrere Steckereinheiten (32) mit einem rotierbaren Element (84) auf einer Stützkomponente (52) enthalten, die rotierend in Buchseneinheiten (34) auf benachbarten Stützkomponenten eingreifen können, wobei die Buchseneinheiten (34) Nockenoberflächen (50) umfassen, so dass, wenn das rotierbare Element (84) auf der Steckereinheit (32) diese in Eingriff nimmt und rotiert wird, dies die jeweiligen Stützkomponenten zusammendrängt.

4. Stützkomponente (10) nach Anspruch 1, wobei die Vielzahl von Aussparungen (18) jeweils eine geschlossene obere Oberfläche aufweisen.

5. Stützkomponente (10) nach Anspruch 1, wobei die Vielzahl von Aussparungen (18) das Einsinken der Stützkomponente in die Bodenoberfläche begrenzen, wenn Material von der Bodenoberfläche in die Vielzahl von Aussparungen (18) eintritt.

6. Vorübergehende Fahrbahn, wobei die vorübergehende Fahrbahn eine Vielzahl von miteinander verbundenen Stützkomponenten (10) nach einem der Ansprüche 1 bis 5 umfasst.

## Revendications

1. Composant de support (10) pouvant être raccordé à des composants similaires pour former une chaussée temporaire, le composant de support (10) comprenant :
une surface inférieure (20) ;
une surface de support supérieure (16) ;
une pluralité d'évidements (18) disposés dans la surface inférieure (20) pour assurer une mise en prise avec le sol ; et
une pluralité d'agencements de raccord (30) étant prévus pour raccorder sélectivement le composant de support (10) aux composants de support adjacents ;
ladite pluralité d'évidements (18) s'effilant chacun vers l'intérieur dans le composant de support (10) selon une direction vers la surface de support supérieure (16) et comprenant une première partie (112) s'étendant à partir de la surface inférieure et une seconde partie (114) s'étendant à partir de la première partie (112) ;
**caractérisé en ce que** la première partie (112) possède une section transversale sensiblement carrée selon une vue en plan et la seconde partie (114) possède une section transversale sensiblement carrée selon une vue en plan, la section transversale sensiblement carrée de la seconde partie (114) étant décalée axialement en rotation par rapport à la section transversale sensiblement carrée de la première partie (112) ;
ladite première partie (112) s'effilant à un premier angle et ladite seconde partie (114) s'effilant à un second angle, ledit second angle étant supérieur au premier angle.

2. Composant de support (10) selon la revendication 1, ladite seconde partie (114) étant décalée axialement en rotation par rapport à la première partie (112) de sensiblement 45°.

3. Composant de support (10) selon la revendication 1, ladite pluralité d'agencements de raccords (30) comprenant une pluralité d'agencements de verrouillage destinés à retenir ensemble les composants de support adjacents raccordés, ladite pluralité d'agencements de verrouillage étant agencés pour être mobile sélectivement entre des états verrouillés et déverrouillés, lesdits agencements de verrouillage étant agencés pour pousser les composants de support adjacents ensemble lorsqu'ils se déplacent vers l'état verrouillé, lesdits agencements de verrouillage comprenant une ou plusieurs unités mâles (32) avec un élément rotatif (84) sur un composant de support (52), pouvant se mettre en prise de manière rotative avec des unités femelles (34) sur des composants de support adjacents, lesdites unités femelles (34) comprenant des surfaces de came (50) de sorte que lorsque l'élément rotatif (84) sur l'unité mâle (32) se met en prise avec celle-ci et tourne, ceci pousse ensemble les composants de support.

4. Composant de support (10) selon la revendication 1, ladite pluralité d'évidements (18) possédant chacun une surface supérieure fermée.

5. Composant de support (10) selon la revendication 1, ladite pluralité d'évidements (18) limitant l'enfoncement du composant de support dans la surface de sol lorsque la matière provenant de la surface de sol pénètre dans la pluralité d'évidements (18).

6. Chaussée temporaire, la chaussée temporaire comprenant une pluralité de composants de support (10) selon l'une quelconque des revendications 1 à 5, raccordés ensemble.
